# EUROPÄISCHE PATENTANMELDUNG

(11) **EP 4 325 400 A1**
(43) Veröffentlichungstag der Anmeldung: **21.02.2024**
(21) Anmeldenummer: 22193243.7
(22) Anmeldetag: 31.08.2022
(51) Int. Cl.: G06N 10/40, G06N 10/20, G06N 10/60

(54) **QUANTENRECHNER FÜR EINE HYBRIDE QUANTEN-KLASSISCHE INFORMATIONSVERARBEITUNG MIT EINEM SCHALTUNGSTRÄGER**

(30) Priorität: 19.08.2022 DE 102022208639
(71) Anmelder: Siemens Aktiengesellschaft, 80333 München (DE)
(72) Erfinder: Mauerer, Wolfgang, 93093 Donaustauf (DE); Niedermeier, Christoph, 80999 München (DE); Wintersperger, Karen, 80804 München (DE); von Sicard, Oliver, 81541 München (DE)
(74) Vertreter: Siemens Patent Attorneys

(57) **Zusammenfassung**

Der Quantenrechner für eine hybride quanten-klassische Informationsverarbeitung weist einen Schaltungsträger auf, an welchem mindestens ein Schaltkreis, umfassend ein oder mehrere nicht als Quantengatter ausgebildete Gatter, sowie mindestens ein Quantenschaltkreis, umfassend ein oder mehrere Quantengatter, angeordnet sind.

## Beschreibung

Die Erfindung betrifft einen Quantenrechner für eine hybride quanten-klassische Informationsverarbeitung mit einem Schaltungsträger.

Quantenprozessoren, sogenannte Quanten-Processing-Units (QPUs), sind hochspezialisierte Rechnerkomponenten mit einem Quantenschaltkreis, die bereits heute einige spezielle Berechnungen schneller als klassische Prozessoren, wie etwa Central-Processing-Units (CPUs) mit einem klassischen Schaltkreis, durchführen können. Dabei wird ein Quantenprozessor in der Regel in Kombination mit einem klassischen Prozessor betrieben.

Der klassische Prozessor wird je nach Anwendung für die Konfiguration, Signalauswertung oder in manchen Algorithmen auch für klassische Optimierungsschritte zwischen iterativen Durchläufen des Quantenprozessors benötigt.

Dies ist insbesondere bei hybriden quanten-klassischen Algorithmen wie beispiels-weise bei Quanten-Näherungs-Optimierungsalgorithmen, also bei QAOA (QAOA = (engl.) Quantum Approximate Optimization Algorithm), oder bei variationalen Quanten-Eigenlösern, also bei VQE (VQE = (engl.) Variational Quantum Eigensolver), der Fall. Diese hybriden quanten-klassischen Algorithmen werden als besonders robust angesehen. Dem Quantenprozessor fällt in diesem Fall die Rolle eines Co-Prozessors zu.

Besonders bei hybriden quanten-klassischen Algorithmen, bei denen auf jeden Durchlauf des Quantenschaltkreises eine klassische Berechnung folgt, die ihrerseits wieder neue Parameter für einen weiteren Durchlauf des Quantenschaltkreises liefert, ist der Datenaustausch zwischen klassischem Prozessor und Quantenprozessor essentiell. Regelmäßig verursacht dabei allerdings die Datenübertragung zu einem klassischen Prozessor eine Verlangsamung des quanten-klassischen Algorithmus, nämlich in jedem Schritt der Ausführung zwischen den Durchläufen des Quantenschaltkreises.

Es gibt derzeit keine Lösung, die diesen seriellen Charakter und die hohe Latenz bei der Ausführung solcher quanten-klassischer Algorithmen reduziert.

Vor diesem Hintergrund des Standes der Technik ist es daher Aufgabe der Erfindung, einen verbesserten Quantenrechner zu schaffen, mittels welchem die bislang bekannte Latenz bei hybrider quanten-klassischer Informationsverarbeitung vermieden werden kann.

Diese Aufgabe der Erfindung wird mit einem Quantenrechner mit den in Anspruch 1 angegebenen Merkmalen gelöst. Bevorzugte Weiterbildungen der Erfindung sind in den zugehörigen Unteransprüchen, der nachfolgenden Beschreibung und der Zeichnung angegeben.

Der erfindungsgemäße Quantenrechner ist für eine hybride quanten-klassische Informationsverarbeitung ausgebildet. Der erfindungsgemäße Quantenrechner weist einen Schaltungsträger auf, an welchem mindestens ein Schaltkreis, umfassend ein oder mehrere nicht als Quantengatter ausgebildete Gatter, sowie mindestens ein Quantenschaltkreis, umfassend ein oder mehrere Quantengatter, angeordnet sind.

Der Schaltkreis mit den nicht als Quantengatter ausgebildeten Gattern bildet einen herkömmlichen klassischen Schaltkreis, der insbesondere als klassischer Prozessor ausgebildet sein kann. Infolge der nicht als Quantengatter ausgebildeten Gatter kann der Schaltkreis lediglich klassische Rechnungen ausführen, sodass die Vorteile der Quanteninformationsverarbeitung für den klassischen Schaltkreis nicht zur Verfügung stehen. Im Rahmen der vorliegenden Anmeldung wird also zwischen "Schaltkreis", was vorliegend stets einen "klassischen Schaltkreis" meint, und einem Quantenschaltkreis unterschieden.

Mittels des erfindungsgemäßen Quantenrechners ist eine nahezu latenzlose Integration von klassischem Schaltkreis und Quantenschaltkreis ermöglicht. Im Gegensatz dazu ist bei herkömmlichen Quantenrechnern für eine hybride quanten-klassische Informationsverarbeitung die Integration von klassischen Schaltkreisen mit Quantenschaltkreisen seriell über klassische Schnittstellen mit großer Latenz realisiert. D. h. bislang müssen - je nach Art des herkömmlichen Quantenrechners - zwischen klassischem Schaltkreis und Quantenschaltkreis Daten über Leitungen oder Glasfasern von außen in einen tiefstgekühlten Teil des Quantenrechners geleitet werden, in welchem der Quantenschaltkreis befindlich ist. Denn typischerweise erfordern derzeit bekannte Quantenschaltkreise regelmäßig Tiefsttemperatur zum Betrieb. Bei solchen bekannten Quantenschaltkreisen aber ist der Eintrag von Wärme ein großes Problem, welches die Betriebsfähigkeit des Quantenschaltkreises stören oder verhindern kann.

Erfindungsgemäß tritt das Problem des Wärmeeintrags vorteilhaft nicht auf, denn erfindungsgemäß ist eine serielle klassische Schnittstelle zwischen klassischem Schaltkreis und Quantenschaltkreis verzichtbar. Infolge der gemeinsamen Anordnung von klassischem Schaltkreis und Quantenschaltkreis auf einem gemeinsamen Schaltungsträger können klassischer Schaltkreis und Quantenschaltkreis gemeinsam gekühlt werden, sodass ein Wärmeeintrag in den Quantenschaltkreis wirksam vermieden werden kann.

Vorteilhaft erfordert der erfindungsgemäße Quantenrechner zudem aufgrund der Entbehrlichkeit serieller klassischer Schnittstellen zwischen klassischem Schaltkreis und Quantenschaltkreis keine mit der Anzahl von Qubits steigende Anzahl von Zuleitungen, um eine klassische Schnittstelle zu realisieren. Kabelbüschel können somit wirksam vermieden werden. Der Betrieb des erfindungsgemäßen Quantenrechners ist folglich deutlich vereinfacht.

Bevorzugt ist bei dem Quantenrechner gemäß der Erfindung der Schaltungsträger halbleiterbasiert. In dieser Weiterbildung der Erfindung sind besonders vorteilhaft sowohl der klassische Schaltkreis als auch der Quantenschaltkreis halbleiterbasiert realisiert, sodass klassischer Schaltkreis und Quantenschaltkreis dieselbe Materialbasis aufweisen. Es müssen folglich keine aufwendigen Signalkonversionen erfolgen, sondern klassischer Schaltkreis und Quantenschaltkreis sind als integriertes Bauteil ausbildbar und miteinander signalverbindbar. Besonders bevorzugt ist der Schaltungsträger siliziumbasiert. In dieser Weiterbildung der Erfindung ist eine Integration des Quantenrechners in herkömmliche Informationstechnologie-Hardware besonders leicht möglich, sodass auf herkömmliche Technologien zur Signalverbindung und/oder zur Integration von Schaltkreis und Quantenschaltkreis miteiander zurückgegriffen werden kann.

Bei dem erfindungsgemäßen Quantenrechner ist oder sind das oder die Quantengatter in einer vorteilhaften Weiterbildung der Erfindung als Quantengatter für supraleitende Qubits realisiert. In dieser Weiterbildung ist die Kühlung des Quantenschaltkreises mit den für supraleitende Qubits ausgebildeten Quantengattern für eine Vermeidung eines Wärmeeintrags in den Quantenschaltkreis essenziell. Erfindungsgemäß ist eine besonders einfache und gemeinsame des gemeinsamen Schaltungsträgers möglich. Insbesondere in dieser Weiterbildung vermeidet der erfindungsgemäße Quantenrechner die bekannten Nachteile herkömmlicher Quantenrechner für hybride quanten-klassische Informationsverarbeitung.

Bei dem erfindungsgemäße Quantenrechner ist oder sind das oder die nicht als Quantengatter ausgebildeten Gatter in einer zweckmäßigen Weiterbildung transistorbasiert ausgebildet. Zweckmäßig handelt es sich bei dem nicht als Quantengatter ausgebildeten Gattern um Gatter, welche klassische Rechnungen ausführen, die die Vorteile der Quanteninformationsverarbeitung nicht nutzen.

Bei dem Quantenrechner gemäß einer bevorzugten Weiterbildung der Erfindung ist oder sind das oder die nicht als Quantengatter ausgebildeten Gatter mittels einer dauerhaften, also dauerhaft integrierten, hardwarebasierten Schaltung realisiert. Alternativ oder zusätzlich können bei dem erfindungsgemäßen Quantenrechner das oder die nicht als Quantengatter ausgebildeten Gatter mittels einer programmierbareren hardwarebasierten logischen Schaltung, insbesondere mittels eines feldprogrammierbaren Gate-Arrays, gebildet sein.

Bei dem Quantenrechner sind der Schaltungsträger und der Schaltkreis und der mindestens einen Quantenschaltkreis in einer vorteilhaften Weiterbildung der Erfindung gemeinsam einteilig ausgebildet. In diese Weiterbildung können klassischer Schaltkreis und Quantenschaltkreis einander räumlich beliebig nah angeordnet sein, sodass eine Latenz bei einer Datenübertragung zwischen klassischen Schaltkreis und Quantenschaltkreis beliebig gering gestaltet werden kann.

Bei dem Quantenrechner ist der mindestens eine Schaltkreis in einer vorteilhaften Weiterbildung der Erfindung zur Konfiguration und/oder zur Signalauswertung und/oder zur Durchführung von Optimierungsschritten, insbesondere zwischen iterativen Rechnungen des mindestens einen Quantenschaltkreises, ausgebildet. Auf diese Weise ist die erfindungsgemäß mögliche latenzarme oder latenzfreie Datenübertragung zwischen klassischem Schaltkreis und Quantenschaltkreis besonders vorteilhaft, da in diesem Fall zwischen jeder iterativen Rechnung des Quantenschaltkreises eine Datenübertragung erforderlich sein kann. In dieser Weiterbildung skaliert der Vorteil des erfindungsgemäßen Quantenrechners gegenüber herkömmlichen Quantenrechnern mit der Anzahl iterativer Rechnungen des Quantenschaltkreises besonders deutlich.

Der erfindungsgemäße Quantenrechner ist besonders bevorzugt zur wiederholten Datenübertragung zwischen Schaltkreis und Quantenschaltkreis ausgebildet. Wie bereits zur vorhergehenden Weiterbildung beschrieben skaliert auch in dieser Weiterbildung der Vorteil des erfindungsgemäßen Quantenrechners gegenüber herkömmlichen Quantenrechnern mit der Anzahl der zwischen Schaltkreis und Quantenschaltkreis vorgesehenen Datenübertragungen.

Der Quantenrechner gemäß der Erfindung weist zweckmäßig einen weiteren Schaltkreis mit nicht als Quantengatter ausgebildeten Gattern auf, welcher zur initialen Konfiguration und/oder zur Entgegennahme eines Ergebnisses ausgebildet ist. Da eine initiale Konfiguration oder eine Entgegennahme eines Ergebnisses lediglich eine einmalige Datenübertragung, nämlich entweder zur Initialisierung des Quantenrechners und/oder zur Entgegennahme eines Ergebnisses der hybriden quanten-klassischen Informationsverarbeitung erfordert, skaliert die in dieser Weiterbildung erforderliche Datenübertragung wischen weiterem klassischen Schaltkreis und Quantenschaltkreis nicht nachteilig mit der Komplexität der quanten-klassischen Informationsverarbeitung. Vielmehr bleibt die zur Initialisierung des Quantenrechners und/oder zur Entgegennahme eines Ergebnisses der quanten-klassischen Informationsverarbeitung erforderliche Datenübertragung von der Anzahl iterativer Rechnungen des Quantenschaltkreises unbeeinrächtigt.

Nachfolgend wird die Erfindung anhand eines in der Zeichnung dargestellten Ausführungsbeispiels näher erläutert. Es zeigen:
- Fig. 1: einen herkömmlichen Quantenrechner mit einem Quantenprozessor und einem Nichtquantenprozessor mit jeweils eigenem Schaltungsträger schematisch in einer Prinzipskizze sowie
- Fig. 2: einen erfindungsgemäßen Quantenrechner mit einem Quantenprozessor und einem Nichtquantenprozessor, welche auf einem gemeinsamen Schaltungsträger integriert sind, schematisch in einer Prinzipskizze.

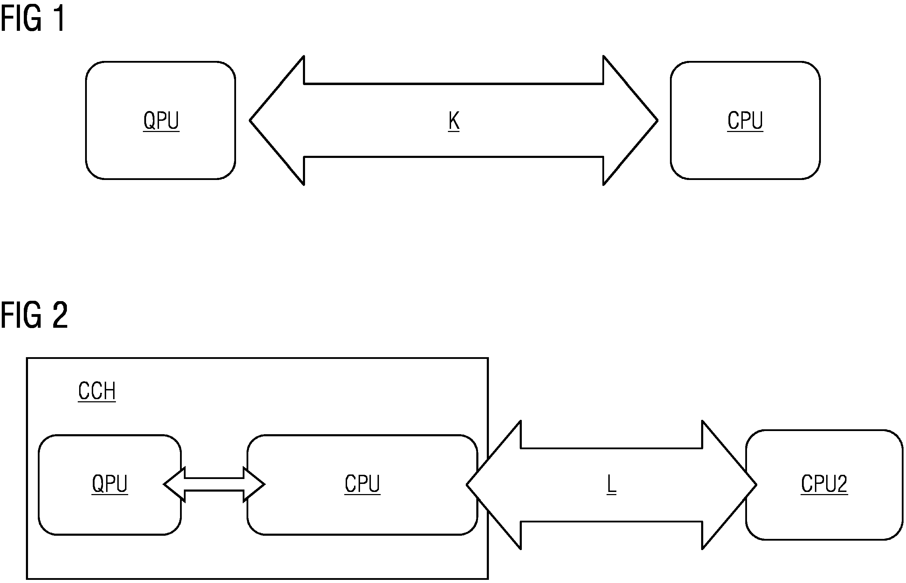

Der in Fig. 1 dargestellte Quantenrechner ist für eine hybride quanten-klassische Informationsverarbeitung ausgebildet und umfasst einen Quantenprozessor QPU mit einem Quantenschaltkreis, welcher mit Quantengattern ausgebildet ist.

Ferner umfasst der in Fig. 1 dargestellte Quantenrechner einen klassischen Prozessor CPU mit einem klassischen Schaltkreis, d. h. einen Prozessor CPU, der ausschließlich mit Gattern aufgebaut ist, die nicht als Quantengatter ausgebildet sind.

Die hybride quanten-klassische Informationsverarbeitung ist im dargestellten Ausführungsbeispiel ein quantengestützter Optimierungsalgorithmus in Form eines sogenannten Quantum Approximate Optimization Algorithm, kurz als QAOA bezeichnet. Ein solcher QAOA umfasst iterative Durchläufe des Quantenschaltkreises des Quantenprozessors QPU. Nach den jeweiligen Durchläufen des Quantenschaltkreises werden mittels eines Übertragungskanals K, im dargestellten Ausführungsbeispiel ein Bündel von Glasfasern, Daten in Form von klassischen Bits vom Quantenprozessor QPU zum klassischen Prozessor CPU übertragen.

Mittels des klassischen Prozessors CPU erfolgen dann im dargestellten Ausführungsbeispiel klassische Optimierungsschritte, die jeweils nachfolgend für die Durchläufe des Quantenschaltkreises des Quantenprozessors QPU herangezogen werden.

Im dargestellten Ausführungsbeispiel ist der Quantenprozessor QPU mittels supraleitender Qubits auf einem Chip auf Siliziumbasis realisiert. Um die für die Realisation der supraleitenden Qubits erforderliche Tieftemperatur bereitstellen zu können, ist der Quantenprozessor QPU in einem Kryostaten (in der Zeichnung nicht dargestellt) aufgehängt, in welchem der Quantenprozessor QPU mittels flüssigen Heliums gekühlt wird.

Der Übertragungskanal K muss somit in den Kryostaten ein- und ausgeführt werden. Dies erschwert zum einen das Kühlen des Quantenprozessors QPU. Zum anderen erfordert der Übertragungskanal K für komplexe Quantenalgorithmen eine Vielzahl von einzelnen Glasfasern, die mittels in an sich bekannter Schnittstellen mit dem Quantenprozessor QPU und dem klassischen Prozessor CPU verknüpft werden müssen. Zugleich erfordert die Datenübertragung über den Übertragungskanal K viel Zeit.

Demgegenüber sind bei der in Fig. 2 dargestellten Architektur eines Quantenrechners der Quantenprozessor QPU und der klassische Prozessor CPU gemeinsam auf einem gemeinsamen Chip CCH ausgebildet. D. h., der gemeinsame Chip CCH enthält zugleich den Quantenschaltkreis des Quantenprozessors QPU sowie den klassischen Schaltkreis des klassischen Prozessors CPU.

Quantenprozessor QPU und klassischer Prozessor CPU sind folglich gemeinsam als einstückiger und einteiliger Chip CCH auf der Basis eines Siliziumwafers ausgebildet.

Dabei ist der gemeinsame Chip CCH in dem Kryostaten aufgehängt, d. h. sowohl der Quantenprozessor QPU als auch der klassische Prozessor CPU werden im in Fig. 2 dargestellten Ausführungsbeispiel auf Tieftemperatur gekühlt.

Da im in Fig. 2 dargestellten Ausführungsbeispiel der Übertragungskanal K nicht aus dem Kryostaten hinausführen muss, kann eine Datenübertragung zwischen dem Quantenprozessor QPU und dem klassischen Prozessor CPU direkt auf dem gemeinsamen und tiefgekühlten Chip CCH erfolgen. Dazu ist ein dem Übertragungskanal K entsprechender und den Quantenprozessor QPU und den klassischen Prozessor CPU signalverbindender Übertragungskanal L vorhanden, welcher mittels auf dem gemeinsamen Chip CCH ausgebildeter elektrischer Leitungsverbindungen ausgebildet ist. Der Übertragungskanal L überträgt Daten zwischen Quantenprozessor QPU und klassischem Prozessor CPU wandlungsfrei, sodass eine Schnittstelle zur Wandlung zusätzlich verzichtbar ist.

Während bei den iterativen Optimierungsschritten der hybriden quanten-klassischen Informationsverarbeitung die iterativen Rechen- und Kommunikationsvorgänge mittels des Quantenprozessors QPU, des klassischen Prozessors CPU und des Übertragungskanals L erfolgen, so erfolgt bei dem in Fig. 2 dargestellten Ausführungsbeispiel zudem eine initiale Konfiguration des klassischen Prozessors mittels eines weiteren klassischen Prozessors CPU2, welcher wie der zuvor beschriebene klassische Prozessor CPU mit klassischen Gattern gebildet ist, die nicht als Quantengatter ausgebildet sind. Zusätzlich übernimmt der weitere klassische Prozessor CPU2 eine Datenverarbeitung des Endergebnisses der hybriden quanten-klassischen Informationsverarbeitung und stellt das Endergebnis bereit. Dazu ist zwar der weitere klassische Prozessor CPU2 wie der klassische Prozessor CPU des in Fig. 1 dargestellten Ausführungsbeispiels mittels Glasfasern mit dem gemeinsamen Chip CCH verbunden. Allerdings ist der weitere klassische Prozessor CPU2 nicht in eine iterative Datenübertragung zwischen den iterativen Durchläufen des Quantenschaltkreises des Quantenprozessors QPU eingebunden, sondern die Kommunikation zwischen dem gemeinsamen Chip CCH und dem weiteren klassischen Prozessor CPU2 erfolgt lediglich zu Beginn und zum Abschluss der hybriden quanten-klassischen Informationsverarbeitung.

In weiteren Ausführungsbeispielen, welche im Übrigen dem in Fig. 2 dargestellten Ausführungsbeispiel entsprechen, ist die hybride quanten-klassische Informationsverarbeitung ist kein quantengestützter Optimierungsalgorithmus, sondern ein Variationaler Quanten-Eigenlöser, der in der Literatur an sich als (engl.) "Variational Quantum Eigensolver" bekannt ist.

Auch solche variationalen Quanten-Eigenlöser erfordern iterative Durchläufe auf einem Quantenprozessor QPU, wobei zwischen den iterativen Durchläufen klassische Optimierungsschritte auf einem klassischen Prozessor CPU durchgeführt werden. Auch eine solche hybride quanten-klassische Informationsverarbeitung lässt sich in diesen weiteren Ausführungsbeispielen auf dem in Fig. 2 dargestellten Quantenrechner ausführen.

In weiteren, nicht eigens dargestellten Ausführungsbeispielen, welche im Übrigen dem dargestellten Ausführungsbeispiel entsprechen, ist der Quantenprozessor QPU nicht mit supraleitenden Quantengattern realisiert, sondern die Quantengatter sind mittels Ionenfallen oder mittels Fehlstellen in Diamanten gebildet. Auch diese weiteren Beispiele von Quantenprozessoren QPU werden als gemeinsamer Chip CCH gemeinsam mit dem klassischen Prozessor CPU mittels eines Kryostaten tiefgekühlt und entsprechen im Übrigen dem in Fig. 2 dargestellten Ausführungsbeispiel.

## Patentansprüche

1. Quantenrechner für eine hybride quanten-klassische Informationsverarbeitung mit einem Schaltungsträger (CCH), an welchem mindestens ein Schaltkreis (CPU), umfassend ein oder mehrere nicht als Quantengatter ausgebildete Gatter, sowie mindestens ein Quantenschaltkreis (QPU), umfassend ein oder mehrere Quantengatter angeordnet sind.

2. Quantenrechner nach dem vorhergehenden Anspruch, bei welchem der Schaltungsträger (CCH) halbleiterbasiert ist.

3. Quantenrechner nach einem der vorhergehenden Ansprüche, bei welchem das oder die Quantengatter als Quantengatter für supraleitende Qubits realisiert ist oder sind.

4. Quantenrechner nach einem der vorhergehenden Ansprüche, bei welchem das oder die nicht als Quantengatter ausgebildeten Gatter transistorbasiert ausgebildet ist oder sind.

5. Quantenrechner nach einem der vorhergehenden Ansprüche, bei welchem das oder die nicht als Quantengatter ausgebildeten Gatter mittels einer dauerhaft integrierten hardwarebasierten Schaltung realisiert sind.

6. Quantenrechner nach einem der vorhergehenden Ansprüche, bei welchem das oder die nicht als Quantengatter ausgebildeten Gatter mittels einer programmierbareren hardwarebasierten logischen Schaltung ausgebildet ist oder sind.

7. Quantenrechner nach einem der vorhergehenden Ansprüche, bei welchem das oder die nicht als Quantengatter ausgebildeten Gatter mittels eines feldprogrammierbaren Gate-Arrays ausgebildet sind oder sind.

8. Quantenrechner nach einem der vorhergehenden Ansprüche, bei welchem der Schaltungsträger, der Schaltkreis (CPU) und der mindestens einen Quantenschaltkreis (QPU) gemeinsam einteilig ausgebildet sind.

9. Quantenrechner nach einem der vorhergehenden Ansprüche, bei welchem der mindestens eine Schaltkreis (CPU) zur Konfiguration und/oder zur Signalauswertung und/oder zur Durchführung von Optimierungsschritten, insbesondere zwischen iterativen Rechnungen des mindestens einen Quantenschaltkreises (QPU), ausgebildet ist.

10. Quantenrechner nach einem der vorhergehenden Ansprüche, welcher zur wiederholten Datenübertragung (L) zwischen Schalt-kreis (CPU) und Quantenschaltkreis (QPU) ausgebildet ist.

11. Quantenrechner nach einem der vorhergehenden Ansprüche, welcher einen weiteren Schaltkreis (CPU2) mit nicht als Quantengatter ausgebildeten Gattern aufweist, welcher zur initialen Konfiguration und/oder zur Entgegennahme eines Ergebnisses ausgebildet ist.
